# EUROPEAN PATENT APPLICATION

(11) **EP 2 138 314 A1**
(43) Date of publication of application: **30.12.2009**
(21) Application number: 09008324.7
(22) Date of filing: 25.06.2009
(51) Int. Cl.: B41J 11/00, B41J 11/42

(54) **Conveying apparatus and printing apparatus**

(30) Priority: 27.06.2008 JP 2008169046; 09.06.2009 JP 2009138277
(71) Applicant: Canon Kabushiki Kaisha, Tokyo (JP)
(72) Inventor: Hayashi, Masashi, Otha-ku Tokyo (JP); Moriyama, Jiro, Otha-ku Tokyo (JP); Takahashi, Kiichiro, Otha-ku Tokyo (JP); Murayama, Yoshiaki, Otha-ku Tokyo (JP); Konno, Yuji, Otha-ku Tokyo (JP); Yazawa, Takeshi, Otha-ku Tokyo (JP)
(74) Representative: Weser, Wolfgang

(57) **Abstract**

The apparatus comprising: a mechanism for moving an object (8, 19); an information acquisition unit acquiring a driving amount information of the mechanism; a sensor (16) for capturing a surface of the object (8, 19) ; a processing section for processing a first image data and a second image data acquired by the sensor (16) at different timings; and a control unit for controlling the mechanism, wherein: the processing section performs processings of: (a) cutting out an image pattern of a part of the first image data; (b) limiting a search range in the second image data within which a similar region similar to the image pattern (602) is searched; (c) searching the similar region within the limited search range (1603) in the second image data; and (d) obtaining the moving information of the object (8, 19) based on a positional relation between the image pattern in the first image data and the similar region in the second image data.

## Description

### BACKGROUND OF THE INVENTION

### FIELD OF THE INVENTION

The present invention relates to the technical field of sheet conveying preferably used in a printing apparatus.

### DESCRIPTION OF THE RELATED ART

A printing apparatus has strict print quality-related requirements and now has a requirement for a further-improved accuracy. Thus, in order to detect the move of a sheet accurately to thereby realize a stable conveying by a feedback control, an attempt has been made to capture the surface of a sheet by an image sensor to detect the move of a conveyed sheet by an image processing.

U.S. Patent No. 7104710 discloses a method for detecting this move of a sheet. This method captures the surface image of a moving sheet by an image sensor a plurality of times to compare a plurality of resultant images by a pattern matching processing to detect a sheet moving distance based on the displacement amount the images. A sensor of the type according to which the sheet image is captured to obtain the image data to subject the data to an image processing to directly detect the sheet moving will be hereinafter referred to as a direct sensor.

The direct sensor requires a huge amount of computation required for the image processing for the pattern matching. If the direct sensor tries to cope with a higher speed (printing speed), the direct sensor must detect the move within a shorter time, thus requiring a processor having a very high computational power. This consequently causes a higher cost, causing an increasing cost for the printing apparatus.

### SUMMARY OF THE INVENTION

The present invention has been made in view of the above disadvantage. The present invention improves the conventional apparatus which uses a direct sensor to directly detect an object to thereby cope with an object moving with a higher speed (higher printing operation) than in the conventional case. Further, the present invention provide the apparatus in which the direct sensor detects the moving information within a short time even when the processing section has a smaller computational power than in the conventional case.

The present invention in its aspect provides an apparatus as specified in claims 1 to 15.

Further features of the present invention will become apparent from the following description of exemplary embodiments (with reference to the attached drawings).

### BRIEF DESCRIPTION OF THE DRAWINGS

Fig. 1 is a top view illustrating the main part of an ink jet printing apparatus;

Fig. 2 is a cross-sectional view illustrating a printing section and a conveying system;

Fig. 3 is a cross-sectional view illustrating a conveying system by the conveyance of a belt;

Fig. 4 is a schematic view illustrating the layout of a code wheel and a rotation angle sensor;

Fig. 5 is a schematic perspective view partially illustrating the structure of a printing head;

Figs. 6A and 6B are a schematic view illustrating the configuration of a direct sensor unit;

Fig. 7 illustrates a method for calculating a moving distance and a conveying speed of a print medium;

Fig. 8 is a schematic view illustrating the layout of matching regions to image data;

Fig. 9 is a block diagram illustrating the configuration of a control system of a printing apparatus;

Fig. 10 is a flowchart illustrating an operation sequence of the apparatus;

Fig. 11 illustrates how a print medium is conveyed in the respective steps;

Fig. 12 is a flowchart illustrating an actual conveying distance detection sequence in Example 2;

Fig. 13 is a schematic view illustrating a method for calculating a moving distance of a print medium;

Fig. 14 is a schematic view schematically illustrating a method for setting a search range;

Fig. 15 illustrates a correlation processing to the second image data;

Fig.16 illustrates discrepancy degrees used to search a correlation window;

Fig. 17 is a flowchart illustrating an actual conveying distance detection sequence;

Fig. 18 is a schematic view illustrating a method of calculating a moving distance of a print medium;

Fig. 19 is a schematic view illustrating the layout of matching regions to image data;

Fig. 20 is a flowchart illustrating an actual conveying distance detection sequence in Example 3; and

Fig. 21 illustrates a comparison example showing the advantage of an embodiment of the present invention.

### DESCRIPTION OF THE EMBODIMENTS

Hereinafter, a preferred embodiment of the present invention will be described with reference to the drawings. However, constituting elements shown in the illustrated embodiment are only illustrative and do not limit the scope of the present invention.

The present invention can be widely used in the field of moving detection for accurately detecting the moving of a sheet-like object as in a printing apparatus for example. The invention can be used, for example, for machines such as a printing apparatus and a scanner as well as industrial and distribution-related machines for conveying an object to subject the object to various processings in a processing section such as inspection, reading, treatment, and marking. Furthermore, when the present invention is applied to a printer, the present invention also can be used not only for a single-function printer but also for a so-called multifunction printer having a copying function and an image scanning function for example. The invention can be used for various printing methods such as an ink jet method, an electrophotographic method, and a thermal transfer method.

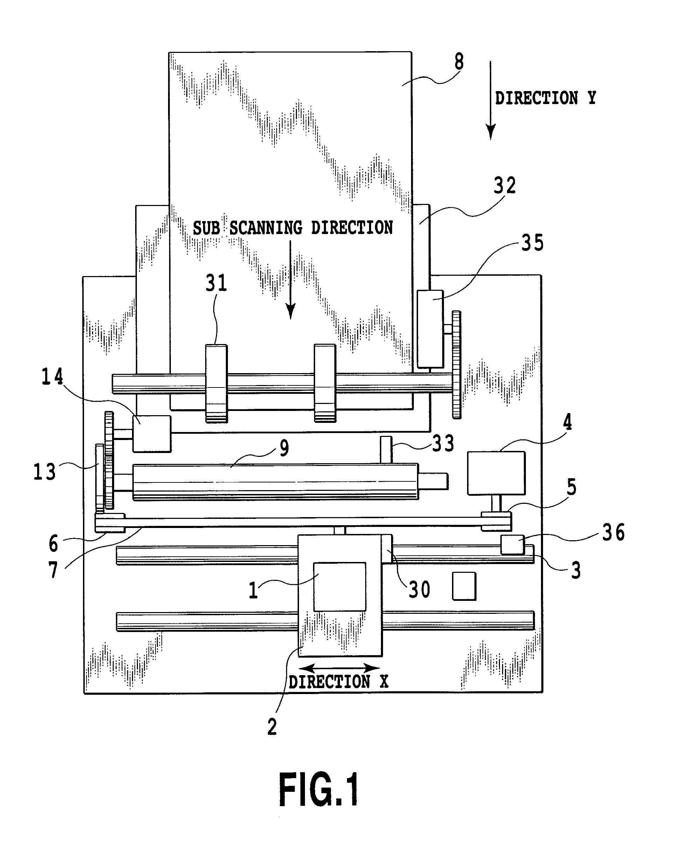

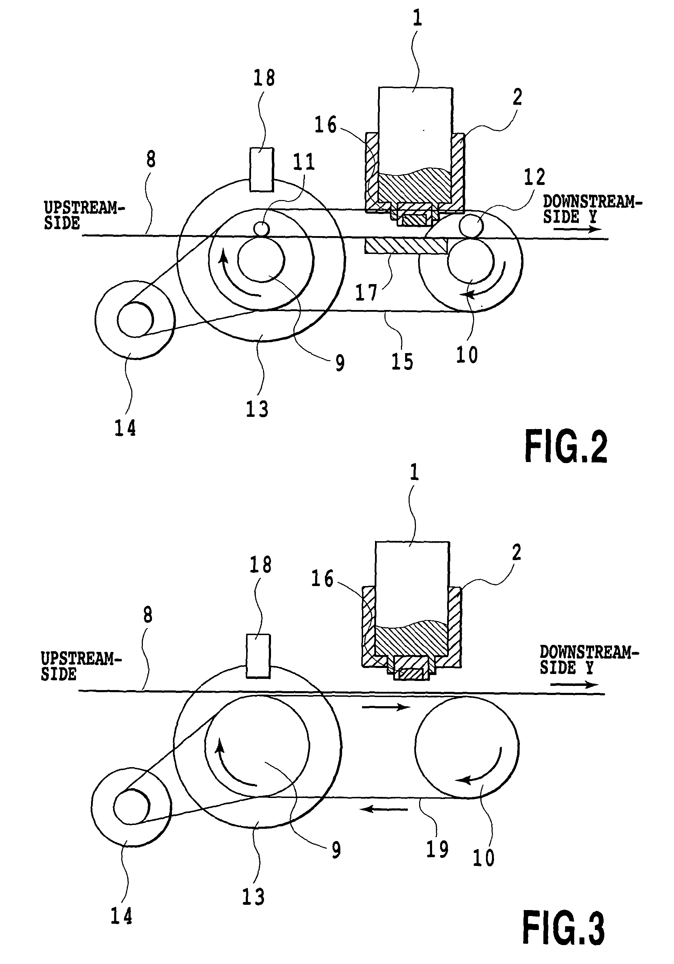

Fig. 1 is a top view illustrating the main part of an ink jet-type printing apparatus as an embodiment of the present invention. Fig. 2 is a cross-sectional view for describing in detail a printing section and a conveying system of the printing apparatus.

A print medium 8, which are sheet-like objects such as papers or thin plastic plates, are provided on an auto sheet feeder 32. When a printing operation is started, a paper-feeding motor 35 is driven and this driving force is transmitted to pickup rollers 31 via a gear for example. The rotation of the pickup rollers 31 causes the print medium 8 to be separated from the auto sheet feeder 32 one by one and are fed to the interior of the printing apparatus. During this feeding, a paper sensor 33 detects the existence or nonexistence of the print medium 8 to thereby determine whether the paper-feeding is performed correctly or not. By the rotation of the first conveying roller 9 as a rotating body, the fed print medium 8 is conveyed, while being abutted with the first conveying roller 9, at a predetermined speed in the direction Y.

With reference to Fig. 2, at a downstream of the first conveying roller 9 along the conveying direction a second conveying roller 10 is provided. Each of the respective conveying rollers has a pinch roller 11 and a spur roller 12 for pushing the conveyed print medium 8 from the upper side. The rotation driving force of the conveying motor 14 is transmitted via a pulley mechanism to the first conveying roller 9. In order to rotate the second conveying roller 10 in synchronization with the first conveying roller 9, a synchronization belt 15 is extended. As described above, the first conveying roller 9 positioned at the upstream of the conveying direction functions as the main driving roller and a rotation angle sensor 18 is structured to detect the rotation of the main driving roller. At a position that is between the two rotating conveying rollers and that is opposed to a head cartridge 1 in the apparatus, a platen 17 composed of a flat plate is provided so as to support the passing print medium 8 from the lower side. The printing region of the conveyed print medium 8 is allowed to be parallel to the ejection opening face of a printing head 26 to have a predetermined distance therebetween by the support from the lower side by the platen 17 as described above and the support from the upper side by the pinch roller 11 and the spur roller 12. The first conveying roller 9 is attached with a code wheel 13. The first conveying roller 9 and the code wheel 13 have a common rotation axis. The rotation angle sensor 18 constitutes a rotary encoder for detecting the rotation of the code wheel 13.

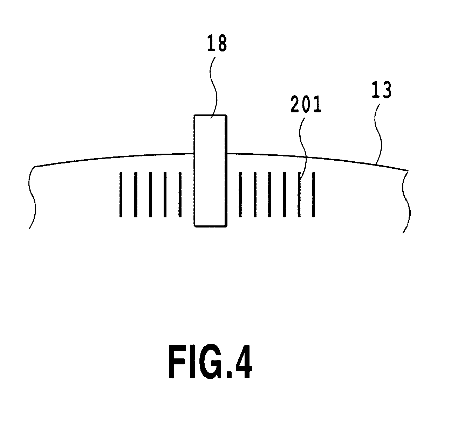

Fig.4 is a schematic view illustrating the layout of the code wheel 13 and the rotation angle sensor 18. At the circumference of the code wheel 13, slits 201 are provided at an equal interval. The rotation angle sensor 18 is provided at a position at which the slits 201 pass. The rotation angle sensor 18 is an optical transmission sensor that detects moving slits 201 to transmit a pulse signal at the detection timing. By this pulse signal, the rotation amount of the code wheel 13 is detected. Based on the time interval at which a pulse signal is transmitted for example, the position of the print medium and the conveying speed for example are calculated. Specifically, in this embodiment, the rotary encoder composed of the code wheel 13 and the rotation angle sensor 18 functions as an information acquisition means for acquiring the information regarding the driving amount of the conveying roller. Based on the information obtained by the information acquisition means, the conveyed amount and/or the conveying speed of the print medium can be calculated indirectly.

With reference to Fig. 1 again, a carriage 2 is guided and supported by a guide shaft 3 provided in the apparatus body to thereby allow the reciprocating moving in the direction X along which the guide shaft 3 extends. The moving force of the carriage 2 is obtained by transmitting the driving force of a carriage motor 4 to a motor pulley 5, a driven pulley 6, and a timing belt 7 for example. The carriage 2 includes a home position sensor 30. When the home position sensor 30 passes a blocking plate 36 positioned at the home position, it can be sensed that the carriage 2 is at the home position.

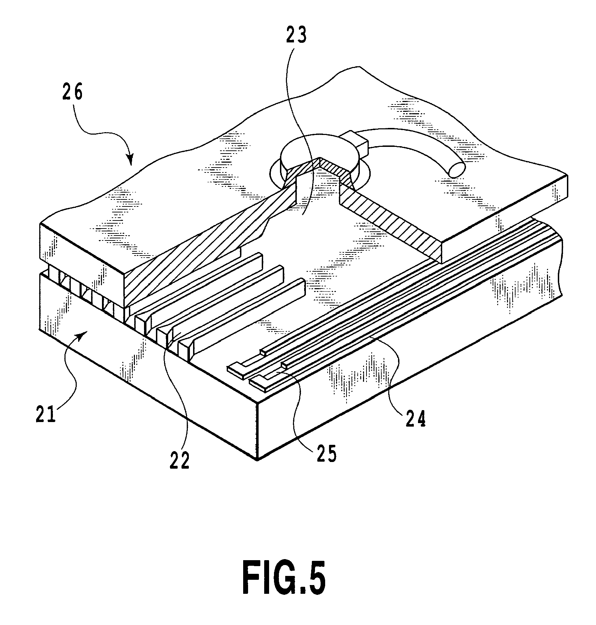

The head cartridge 1 provided in the carriage 2 includes: the printing head 26 for ejecting ink based on the ink jet method; and an ink tank for storing ink to be supplied to the printing head 26. The printing head 26 is structured to eject, while moving together with the carriage 2 in the direction X, ink to the print medium 8 moving at the lower side at a predetermined timing and based on an image signal. Fig. 5 is a schematic perspective view illustrating a part of the structure of the printing head 26. The printing head 26 used in this embodiment includes a plurality of electrothermal transducing element for generating thermal energy and has a mechanism through which the generated thermal energy is used to eject ink. The ejection opening face 21 opposed to the print medium at a fixed distance therebetween has a plurality of ejection openings 22 provided with a predetermined pitch. The ink supplied from the ink tank is stored in a common chamber 23 and is subsequently introduced to a plurality of ink paths 24 communicating with the individual ejection openings 22 because of capillary attraction. In the individual ink paths 24, parts close to the ejection openings 22 have the electrothermal transducing elements 25 for generating thermal energy. The electrothermal transducing elements 25 receive a predetermined pulse based on an image signal and the resultant heat causes the film boiling of the ink in the ink paths 24. The resultant foaming pressure causes a predetermined amount of ink to be ejected through the ejection openings 22. The ink jet method is not limited to the one using thermal energy and also may be a method for ejecting ink by a piezoelectric element, an MEMS element, or an electrostatic element for example.

The printing apparatus of this embodiment is a serial-type ink jet printing apparatus. The direction along which the ejection openings 22 are arranged is in the direction intersecting with the moving direction of the carriage 2 (direction X). An image is formed on the print medium 8 by alternately repeating a printing scanning for ejecting ink through the ejection openings 22 while reciprocating the carriage 2 and a conveyance operation for rotating the first conveying roller 9 and the second conveying roller 10 to thereby convey, by a predetermined amount, the print medium in a stepwise manner in the direction Y. Alternatively, another printing method also may be used where the carriage 2 is reciprocated in the direction X simultaneously with conveyance of the print medium in an uninterrupted and continuous manner.

A side face of the carriage 2 has a direct sensor unit 16 for capturing the surface of the print medium 8 to directly sense the conveyed amount based on an image processing. The direct sensor unit 16 may be provided at any position so long as the sensing region thereof covers positions where the print medium passes. The direct sensor unit 16 may be provide at the side of the platen 17 in Fig.2 to detect back side of the print medium, for example.

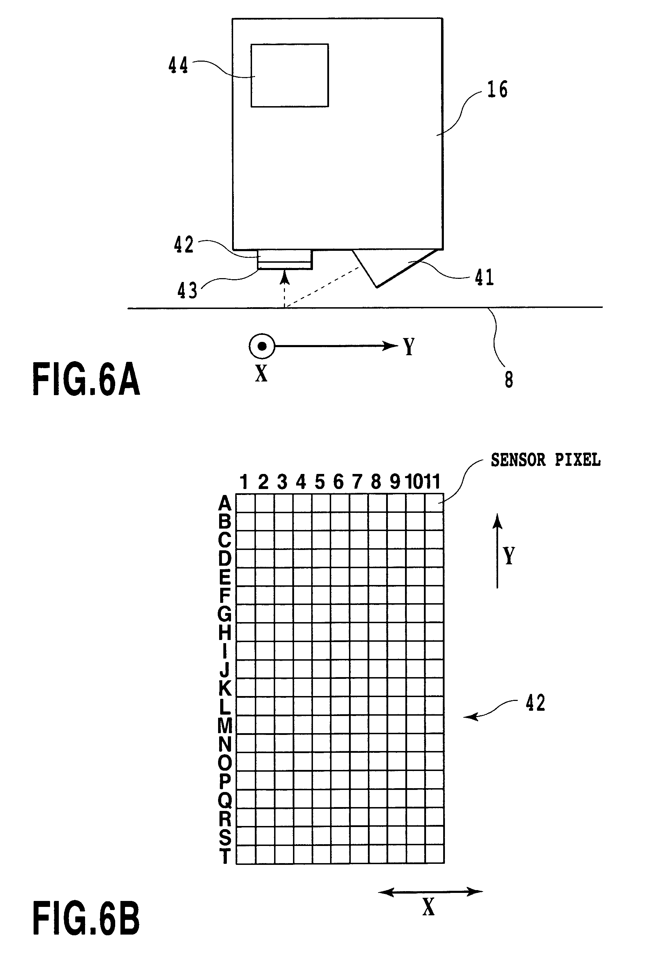

Figs. 6A and 6B are a schematic view illustrating the configuration of the direct sensor unit 16. The direct sensor unit 16 includes: a light emitting element 41; and an image capturing element 42 that receives light emitted from the light emitting element 41 and reflected from the print medium 8 via an optical system 43. The image capturing element 42 may be a line sensor or an area sensor having a plurality of photoelectric conversion elements such as a CCD device or a CMOS device. The image capturing element 42 of this embodiment is assumed to have a structure in which the photoelectric conversion elements each having horizontal and vertical sizes of 10µm are arranged in the two-dimensional manner so that the photoelectric conversion elements are provided in 11 lines in the horizontal direction and 20 columns in the vertical direction as shown in Fig. 6B. In this example, the optical system 43 and the image capturing element 42 are constructed to have an optical magnification of x1. Specifically, a region detected by one photoelectric conversion element corresponds to a region of a print medium having horizontal and vertical lengths of 10µm. The image data captured by the image capturing element 42 is subjected by an analog front end 44 to a predetermined processing and is subsequently transferred to a controller of the apparatus body.

The acquired image data herein means image information which characterizes a partial surface status of the print medium 8 and is based on an input values obtained from the capturing of the image capturing element 42. For example, the acquired image data may be information representing the shading appearing due to the surface shape of the print medium 8 (e.g., the fiber pattern of a paper) or a pattern printed on the surface in advance.

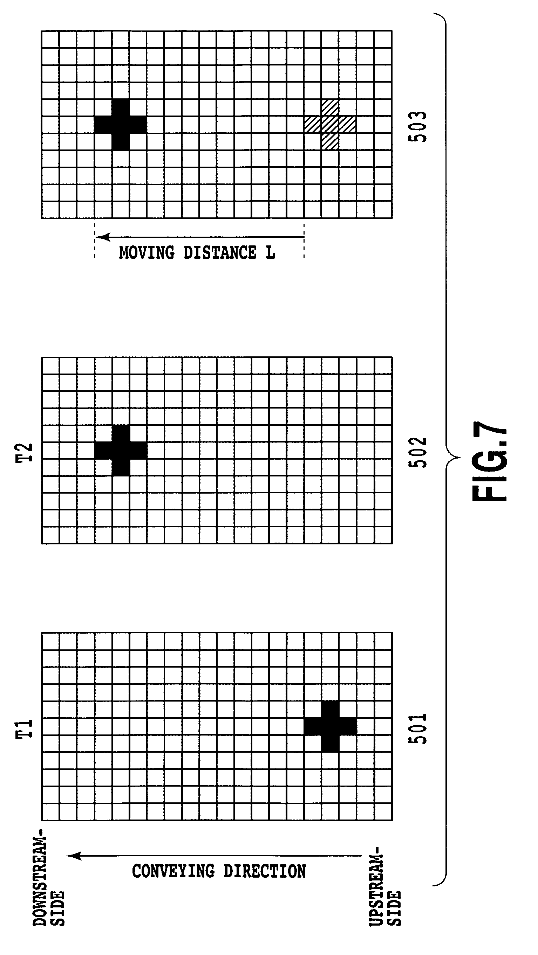

Fig. 7 illustrates a method of calculating, based on the image data obtained by the direct sensor unit 16, the moving distance and the conveying speed of the print medium 8 by the processing section of the controller and at two different timings T1 and T2. The reference numeral 501 denotes the first image data obtained at the time T1 by allowing the direct sensor unit 16 to detect the surface of the print medium being conveyed. When such image data is obtained, the processing section of the controller places a matching region 601 to the image data 501. The matching region 601 has a predetermined size.

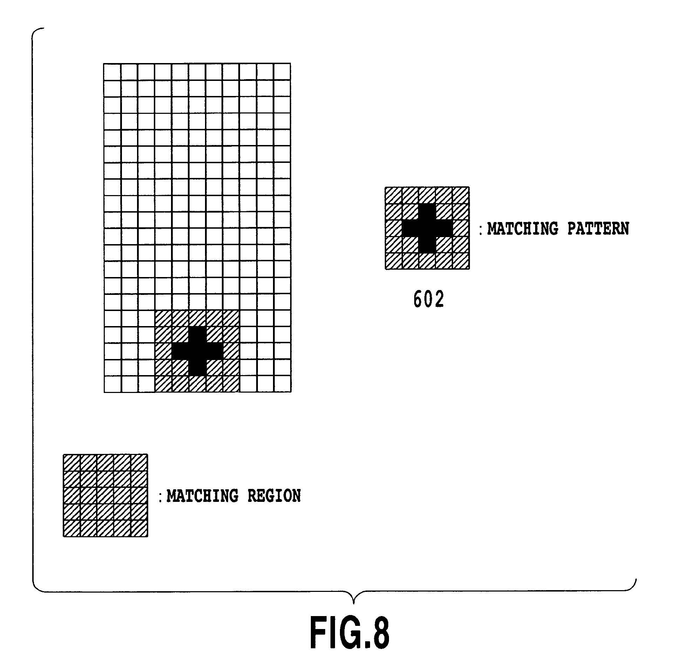

Fig. 8 is a schematic view illustrating the layout of the matching region to the image data 501. In this embodiment, the matching region has a region composed of 5 pixels x 5 pixels. A characteristic pattern (cross-shaped pattern in this case) which is present on a surface of the print medium 8 is placed in the matching region. Thereafter, the processing section of the controller extracts the image data in the matching region and stores the data as a matching pattern 602.

In Fig. 7, the reference numeral 502 denotes the second image data that is obtained by allowing the direct sensor unit 16 to detect, at the time T2 different from time T1, the surface of the print medium being conveyed. The processing section of the controller causes the matching region to sequentially travel with regard to the second image data to search and detect a position most similar to the previously-stored position of the matching pattern 602. Then, based on a distance L between the position of the matching pattern in the first image data 501 and the position of the matching pattern in the second image data 502, a moving distance is acquired within which the print medium 8 has moved from the time T1 to the time T2. Alternatively, the travel speed of the print medium 8 also can be calculated based on a difference between the time T1 and the time T2. In this case, in this embodiment, in order to calculate the distance L more speedily, a region within which the matching region is caused to sequentially travel with regard to the second image data 502 is limited. This method will be described in detail later.

The direct sensor unit 16 also can be used for, in addition to the measurement of the moving information of the print medium, another purpose of determining the existence or nonexistence of the print medium based on the detection value of the direct sensor unit 16 (for example, a average value of the outputs about the pixels) .

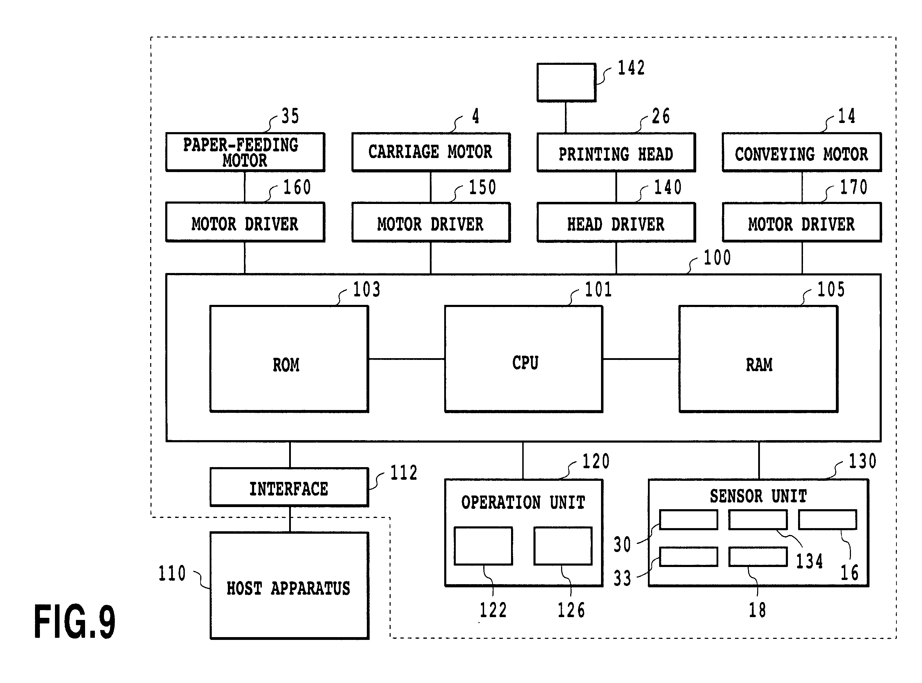

Fig. 9 is a block diagram illustrating the configuration of the control system of the printing apparatus. In Fig. 9, the controller 100 is the main controller of the printing apparatus. The controller 100 has, for example, a CPU 101 in the form of a microcomputer, a ROM 103 storing therein fixed data such as a program or a predetermined table, and a RAM 105 including a region for developing image data and a region for operation for example. A host apparatus 110 is an apparatus that is connected to the outside of the printing apparatus and that functions as an image supply source. The host apparatus 110 may be a computer that prepares or processes printing-related data such as an image or also may be a reader for reading an image.

Image data, a command, and a status signal for example supplied from the host apparatus 110 can be transmitted to or received from the controller 100 via an interface (I/F) 112. An operation unit 120 is composed of a group of switches through which an instruction inputted by an operator is received. The operation unit 120 has a power source switch 122 and a recovery switch 126 for instructing the start of the recovery of absorption for example. A sensor unit 130 is composed of a group of sensors for detecting the status of the apparatus. In this embodiment, the sensor section 130 includes the above-described home position sensor 30, the paper sensor 33, the direct sensor unit 16 and the rotation angle sensor 18 for detecting the conveyed amount, and a temperature sensor 134 for detecting the environment temperature for example.

The reference numeral 140 denotes a head driver that drives the electrothermal transducing elements 25 of the printing head 26 depending on the printing data. The head driver 140 includes a shift register that arranges the printing data so as to correspond to the respective plurality of electrothermal transducing elements 25 and a latch circuit latched at an appropriate timing. The head driver 140 also includes a logic circuit element that causes, in synchronization with the driving timing signal, the electrothermal transducing element 25 to operate and a timing setting section for appropriately setting the discharge timing in order to adjust the positions of dots on the print medium for example.

In the vicinity of the printing head 26, a subheater 142 is provided that adjusts the temperature of the printing head 26 in order to stabilize the ink ejecting characteristic. The subheater 142 may be provided on a substrate of the printing head 26 as in the electrothermal transducing element 25 or also may be attached to the body of the printing head 26 or the head cartridge 1. The reference numeral 150 denotes a motor driver for driving the carriage motor 4. The reference numeral 160 denotes a motor driver for driving the paper-feeding motor 35. The reference numeral 170 denotes a motor driver for controlling the driving of the conveying motor 14.

In the above-described printing apparatus, the print medium is conveyed while being sandwiched at positions of the first conveying roller 9 and the second conveying roller 10, respectively. Another conveying mechanism for conveying a print medium also may be used in which the print medium is retained and transferred by a belt. This belt conveyance mechanism has rotation rollers provided at a plurality of positions and a belt extending among the plurality of rotation rollers. The rotation of the rotation rollers rotates the belt to thereby cause the print medium provided on the belt to move. The information acquisition means acquires the information regarding the rotation amount of a rotation roller or a rotation gear among the plurality of rotation rollers or gears. However, the information is not limited to the information regarding only one rotation roller or only one rotation gear. The information also may be information regarding of a plurality of rotation roller or a plurality of rotation gear.

Fig. 3 is a schematic view illustrating the configuration of printing apparatus including the belt conveyance mechanism. In Fig. 3, the same members as those of Fig. 2 are denoted with the same reference numerals. The printing apparatus includes the first conveying roller 9 and the second conveying roller 10 as rotation rollers. The first conveying roller 9 and the second conveying roller 10 have therebetween a belt 19 extending therebetween. The belt 19 has a width wider than the width of the maximum sheet among sheets used. When the first conveying roller 9 receives the driving force from the conveying motor 14, the conveying roller 9 is rotated to cause the belt 19 to rotate between the rollers in the direction shown by the arrow and the second conveying roller 10 is also driven to rotate. As described above, the first conveying roller 9 positioned at the upstream of the conveying direction functions as the main driving roller and the rotation angle sensor 18 detects the rotation of the main driving roller.

The belt 19 has thereon the print medium 8 in a manner that the print medium 8 is closely provided on the belt 19 by electrostatic adsorption. The print medium 8 is conveyed, in accordance with the rotation of the belt 19, from the upstream to the downstream in the shown direction Y. The direct sensor unit 16 provided in the carriage 2 captures the surface of the print medium 8 or the surface of the belt 19 to thereby acquire the image data. The direct sensor may be provide at the back side of the belt to detect the inside surface of the belt. The print medium 8 on the belt 19 is strongly retained by electrostatic adsorption and thus is substantially prevented from being slipped or dislocated from the belt 19. Thus, capturing the belt 19 to calculate the moving of the belt is equivalent to calculating the moving of the print medium 8.

Next, the following section will describe a method of using the above-described printing apparatus to carry out a conveyance control at a higher speed than in the conventional case while using both of the conveyance information obtained from the rotation angle sensor 18 and the conveyance information obtained from the direct sensor unit 16 in accordance with some

### examples.

### (Example1)

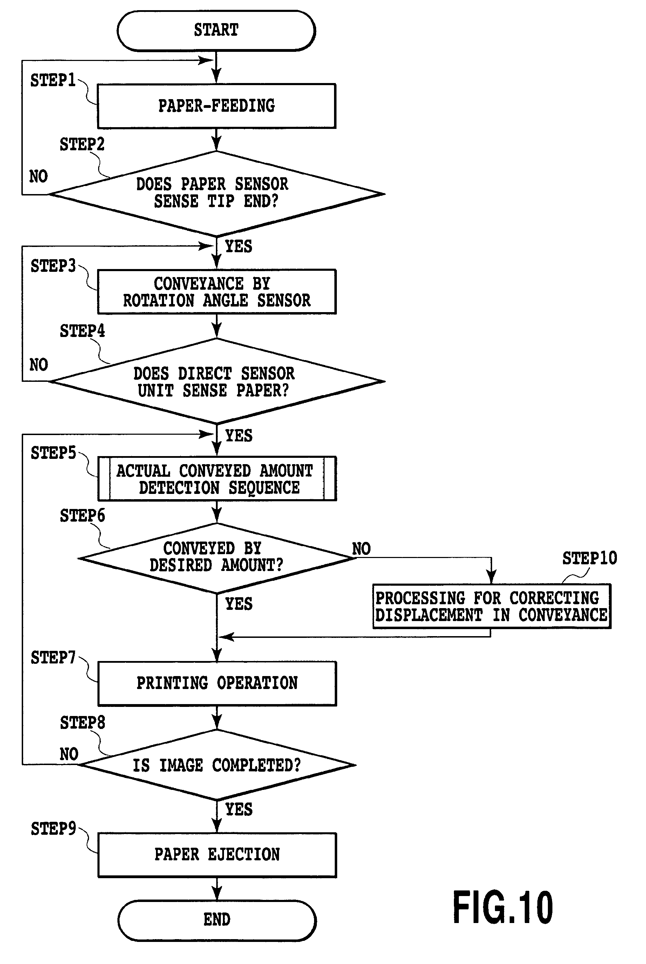

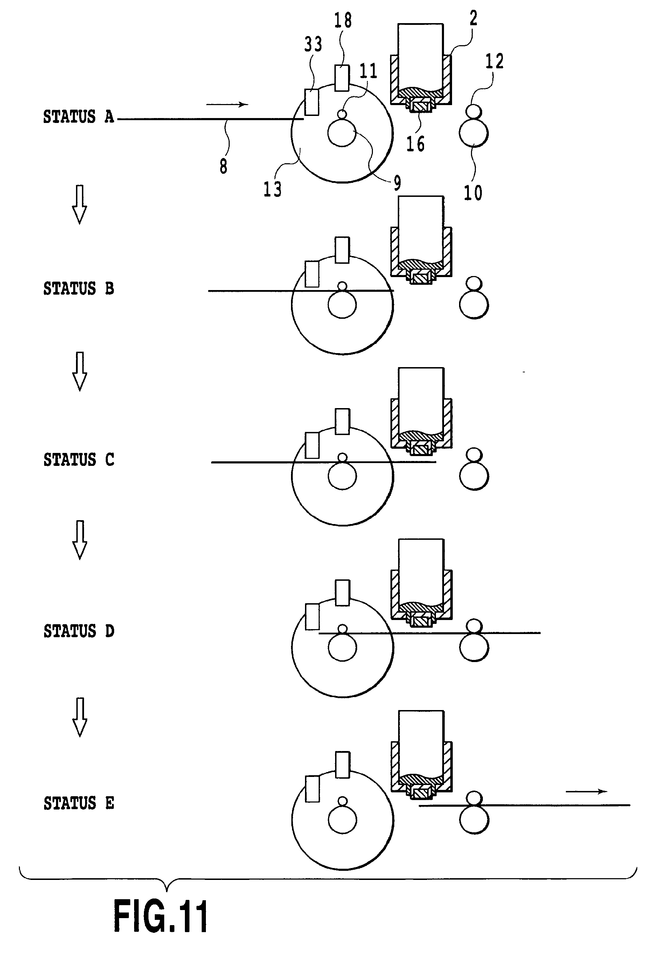

Fig. 10 is a flowchart illustrating the processing performed by a CPU 101 in the control of the conveyance of a print medium in this embodiment. Fig. 11 illustrates the conveyance status of a print medium in the respective steps shown in the flowchart.

When the printing operation is started based on a printing start command from the host apparatus 110, the CPU 101 drives the paper-feeding motor 35 to feed one print medium 8 from the auto sheet feeder 32 (STEP 1). Next, STEP 2 causes the CPU 101 to determine whether the paper sensor 33 senses the tip end of the print medium 8 or not. When determining that the tip end of the print medium 8 is detected, then the processing proceeds to STEP 3. When determining that the tip end of the print medium 8 is not yet detected in STEP 2 on the other hand, the processing returns to STEP 1 and continues the paper-feeding operation. Thereafter, until the tip end of the print medium is sensed, STEP 1 and STEP 2 are repeated. In Fig. 11, the status A represents a status where the tip end of the print medium 8 reaches a position immediately before the paper sensor 33.

In STEP 3, the CPU 101 starts the driving of the conveying motor 14 and simultaneously starts the detection by the rotation angle sensor 18 of the rotation amount of the code wheel 13. As a result, the print medium 8 is conveyed in the direction Y based on the information from the rotation angle sensor 18. This will be described specifically below. The CPU 101 determines the rotation amount and the rotation speed of the conveying roller 9 based on a timing at which the rotation angle sensor 18 senses a slit formed in the code wheel 13. Then, the control unit performs the conveyance control while feeding back this actual measurement value to the driving of the conveying motor 14.

Next, in STEP 4, the CPU 101 determines whether the direct sensor unit 16 senses the print medium 8 or not. When determining that the direct sensor unit 16 senses the print medium 8, the processing proceeds to STEP 5 and an actual conveyance amount detection sequence (which will be described later) is carried out. When determining that the direct sensor unit 16 has not sensed the print medium 8 yet on the other hand, the processing returns to STEP 3. Then, until the direct sensor unit 16 senses the print medium 8, the steps of STEP 3 and STEP 4 are repeated. In Fig. 11, the status B represents a conveyance status prior to the timing at which the tip end of the print medium 8 is sensed by the direct sensor unit 16. The status C represents a status where the tip end of the print medium 8 is sensed by the direct sensor unit 16 and the actual conveyance amount detection sequence is performed.

Again, with reference to the flowchart of Fig. 10, when the actual conveyance amount detection sequence of STEP 5 provides the actual conveyed amount of the print medium (e. g. , 130µm), then the CPU 101 compares this value with the conveyed amount measured by the rotation angle sensor and stored (e.g., 120µm) to thereby determine whether there is a displacement amount therebetween that is equal to or higher than an allowable range or not. When the displacement amount is within the allowable range, the processing proceeds to STEP 7. When the displacement amount is larger than the allowable range on the other hand, the processing proceeds to STEP 10 to perform a correction processing corresponding to the displacement amount. In this example, the displacement is 10µm and a correction processing is performed corresponding to 10µm. This correction processing may be achieved by shifting a timing to stop the conveying operation to adjust the conveying amount, by redoing the conveyance of the print medium or by moving printing data in the direction Y while leaving the conveyance of the print medium as it is. Alternatively, in the case of a configuration where the position of the carriage 2 or the printing head can be accurately moved in the direction Y, the carriage 2 or the printing head also can be moved. After the completion of the correction processing, the processing proceeds to STEP 7.

In STEP 7, the CPU 101 uses the printing head 26 to perform a printing operation for one line based on the image data while causing the carriage 2 to move in the direction X. Next, in STEP 8, the CPU 101 determines whether the printing of the image data for one page is completed or not. When determining that not-yet-printed image data is still left, the processing returns to STEP 5 to subject the next line to the actual conveyance amount detection sequence. In STEP 8, until it is determined that the printing of the image data for one page is completed, the actual conveyance sequence and the printing operation as described above are repeated. In Fig. 11, the status D represents a status of the final stage where the information regarding the conveyed amount by the rotation angle sensor 18 is obtained. In STEP 8, when it is determined that the printing of the image data for one page is completed, then a paper ejection processing is performed in STEP 9 and this processing is completed. In Fig. 11, the status E represents a status where the paper ejection operation is performed.

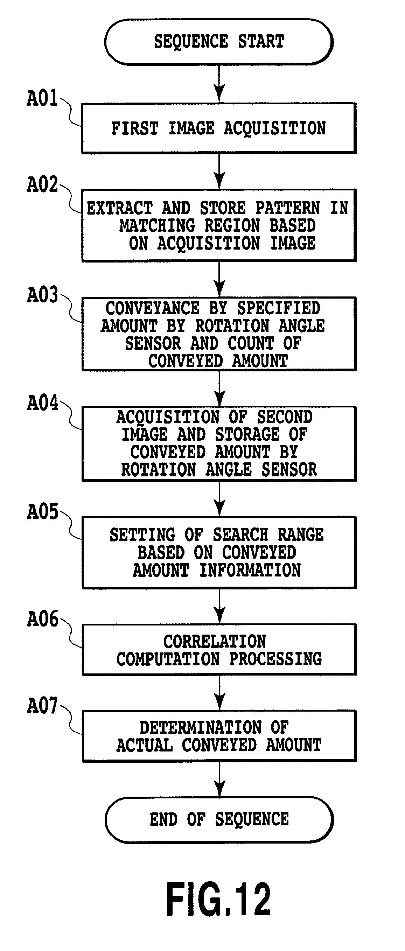

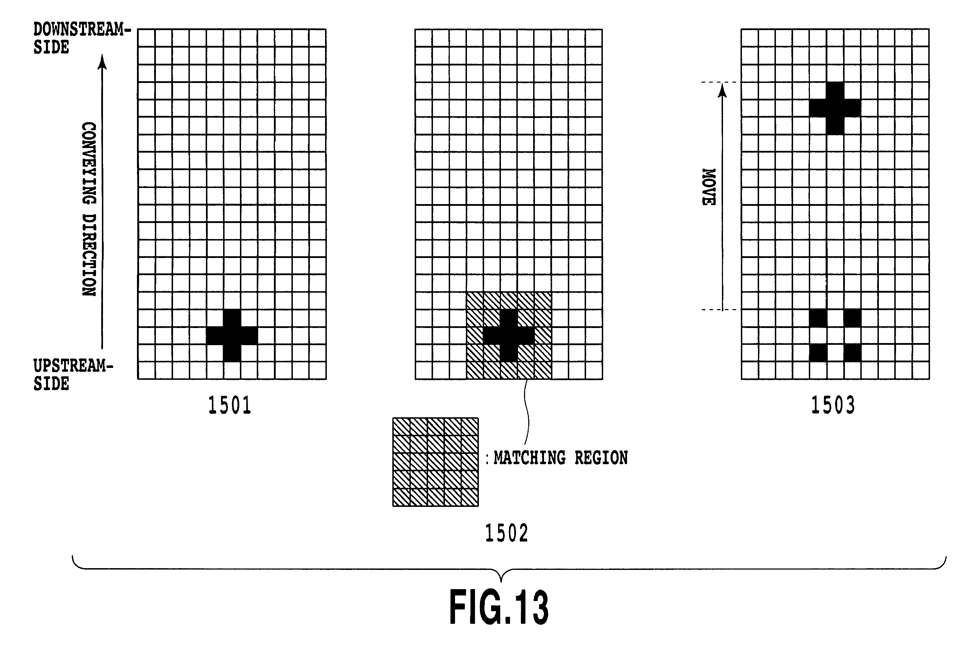

Next, the following section will describe in detail the actual conveyance detection sequence performed in STEP 5. Fig. 12 is a flowchart illustrating the respective steps in the actual conveyance detection sequence. Fig. 13 is a schematic view illustrating a method of calculating, based on the image data obtained from the direct sensor unit 16, the information regarding the moving of the print medium 8 (moving amount or speed). The following section will describe with reference to Fig. 12 and Fig. 13.

When the actual conveyance detection sequence is started, the CPU 101 in Step A01 uses the direct sensor unit 16 to acquire the image of the print medium 8 as the first image data (1501). When the direct sensor unit 16 in the configuration of Fig. 3 is used to image the surface of the belt 19, the first image data and the second image data represent the images of the surface of the belt.

The CPU 101 in Step A02 causes a matching region having a region of 5 pixels x 5 pixels to be positioned at an appropriate position at the upstream-side of the first image data 1501. Fig. 13 shows an example where a matching region 1502 is placed so as to have a characteristic pattern (cross-shape pattern in this case) which is present on the surface of the print medium 8. The cross-shape pattern is a mere schematic pattern for illustration and is not always used in an actual case. Thereafter, the CPU 101 extracts the image data included in the matching region and stores this data as a matching pattern (a part of the image pattern in the first image data). As described above, the processing in Step A02 is a processing to cut an image pattern of a region of a part of the first image data.

In Step A03, based on the information from the rotation angle sensor 18 (i.e., while counting the actually-measured conveyed amount obtained from the rotation angle sensor 18), the print medium 8 is conveyed by the target amount (one stepwise travel) in the direction Y and this conveyed amount (moving distance) is stored. In this example, it is assumed that the actually-measured conveyed amount obtained from the rotation angle sensor 18 is 120µm.

In Step A04, the CPU 101 uses the direct sensor unit 16 to acquire the image of the print medium 8 (or the belt 19) as the second image data (1503) at a timing different from the timing at which the first image data is acquired.

In Step A05, based on the conveyed amount (120µm) stored in Step A03, a region (search range) that is for performing a correlation processing for searching the matching pattern in the second image data 1503 and that is a limited region in the entire image region.

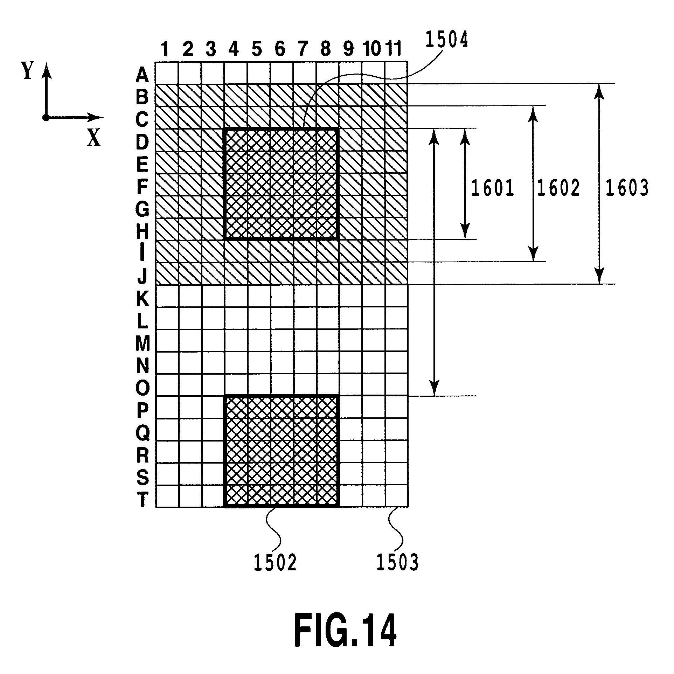

Fig. 14 is a schematic view for specifically illustrating the method for setting search range. In Fig. 14, the matching pattern is positioned in the first image data 1501 at regions from the line P to the line T. On the other hand, a region ahead by 120µm in the direction Y is a region shown by the reference numeral 1601 from the line D to the line H. Specifically, the region 1502 on the first image data at which the matching pattern is cut out is estimated as moving to the region 1504 on the second image data. When assuming that an error in the conveying accuracy is about ±10µm to the target conveyed amount, a region within which the matching pattern may be positioned is a region shown by the reference numeral 1602 from the line C to the line I. In this example, in order that the correlation processing can be performed in the range sufficiently including this region 1602, a region 1603 further having margins of 10µm (one pixel) at the upstream-side and at the downstream-side (a region hatched by diagonal lines), with regard to the region 1602, is set as the search range.

The reason why the search range is provided with regard to the estimated region 1504 not only in the direction Y but also in the direction X is that, when the print medium is conveyed in the direction Y, the print mediummay not be caused to accurately move in the direction Y and may be displaced also in the direction X (positional deviation phenomenon). In consideration of such an positional deviation phenomenon, the limited region is provided as a correlation computation search range around the estimated region 1504 so that the limited region includes margins corresponding to the predetermined number of pixels in the direction X and the direction Y. The range may be appropriately determined depending on the conveying accuracy or printing resolution of printing apparatus or the sizes of the image capturing element (photoelectric conversion element) for example and is not limited to the above value.

As described above, in the processing of A5, the range within which a similar region in the second image data that is similar to the image pattern cut out from the first image data is searched is limited based on the information acquired by the rotary encoder (information acquisition means). In particular, the neighboring range of the estimated position away from the image pattern of the first image data by the moving distance from the timing at which the first image data estimated based on the information acquired by the information acquisition means is acquired to the timing at which the second image is acquired is set as the search range for the second image data. The search range is set as a region obtained by adding, to the estimated position, a predetermined number of pixels to both of the upstream-side and the downstream-side of the moving direction of the print medium and adding a predetermined number of pixels to left and right sides in the width direction of the print medium orthogonal to the moving direction.

In Step A06, the search range set in Step A05 is subjected to the correlation computation processing in an order from an end pixel. In the processing of Step A06, with regard to the second image data, a similar region similar to the image pattern cut out from the first image data is searched in the limited search range (1603) as described above.

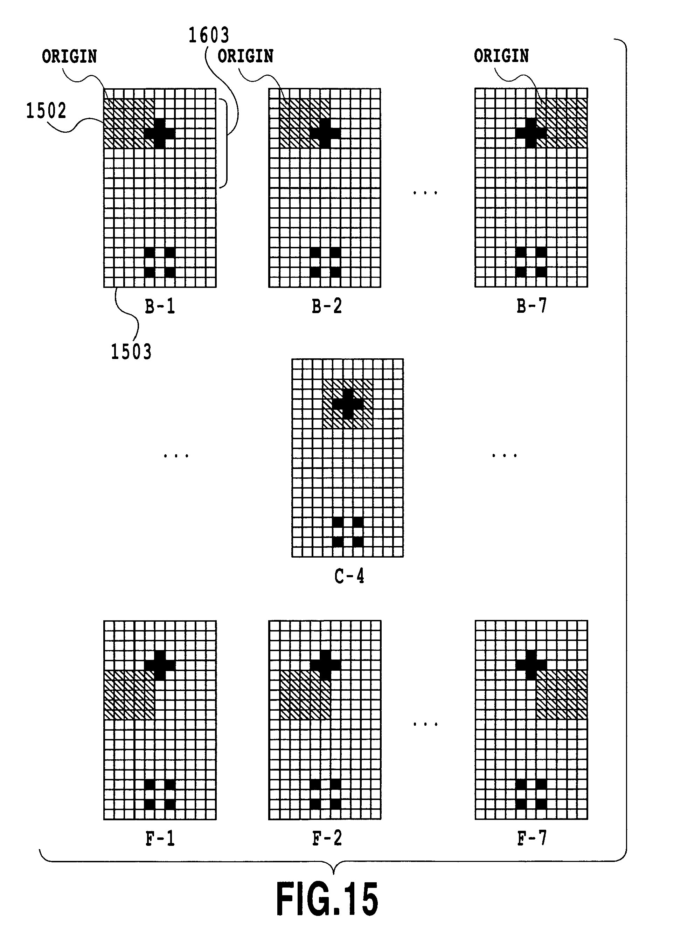

Fig. 15 illustrates an order of placing the matching region 601 in the search range obtained in Step A05 in order to subject the second image data 1503 to the correlation processing. First, the matching region 1502 is placed at a position at the line B and the first column (upper-left) and the similarity degree is calculated.

Here, the similarity degree is calculated by using SSD (Sum of Squared Difference) for example. SSD sets a discrepancy degree S which is obtained as a sum of absolute values of differences between each pixel f (I, j) in the matching pattern and each pixel g(I,j) in the matching region. Regarding SSD, as the discrepancy degree is smaller the similar degree is larger.

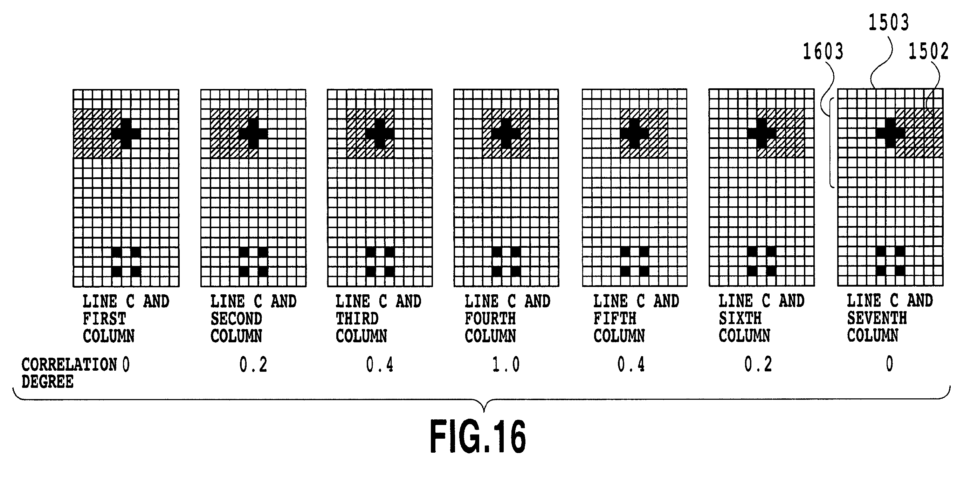

Fig. 16 illustrates an example of the matching pattern and the discrepancy degrees of the matching region when the range from the first column to the seventh column in the line C is searched. It is assumed that the image comprises binary image data. A pixel in which the pattern exists (that is, the pixel is included in the cross-shape portion) is represented as 1, and a pixel in which the pattern does not exist is represented as 0. When assuming that the matching region has an origin at the line C and the fourth column, it can be understood that the matching pattern stored in Step A02 is matched with the pattern placed in the matching region 1502 and the smallest discrepancy degree of 0 is obtained. Thus, this position is determined as a matching position and is obtained as the result of the correlation computation processing in Step A06.

In Step A07, based on the relative positional relation between the matching region obtained in Step A06 and the matching region stored in Step A02 (a difference in the number of pixels), the actual moving amount of the print medium in the conveyance operation of Step A03 is calculated. Specifically, the processing of Step A07 calculates the moving information based on the positional relation (or an interval) between the image pattern cut out from the first image data and the most similar region in the second image data. In the case of this example, the positional relation corresponds to 13 pixels in the direction Y and thus the actual moving amount of the print medium is 130µm. Then, the actual conveyance amount detection sequence in STEP 5 of Fig. 10 is completed.

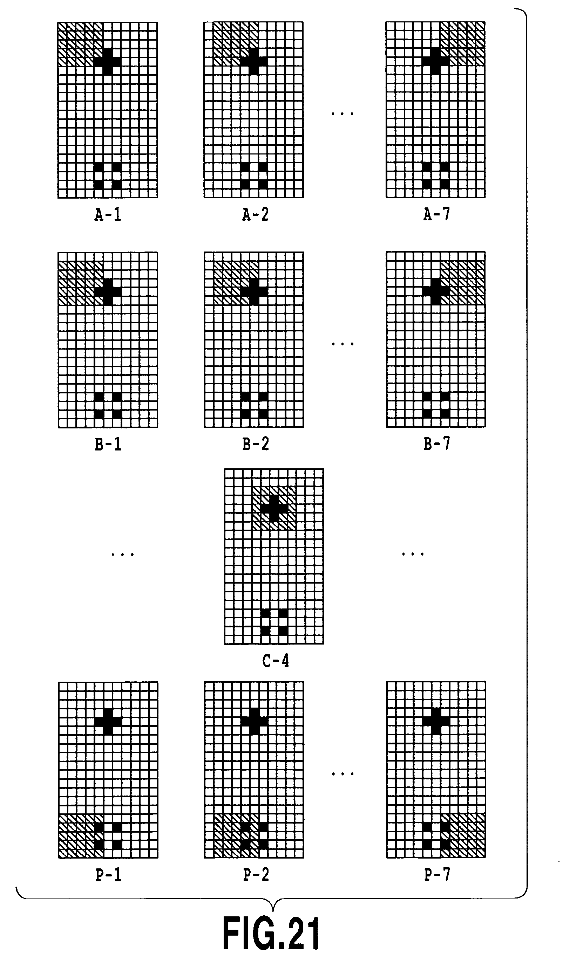

As described above, a target region of the correlation computation processing is reduced and the computation amount is significantly reduced by setting the search range that is limited based on the conveyed amount obtained from the information acquisition means (rotary encoder) for acquiring the information regarding the driving amount of the mechanism. In the case as in the conventional technique where the range for the correlation processing covers all regions of the second image data 1503, the correlation computation must be performed 16x7=112 times as shown in Fig. 21. In contrast with this, in this example, the region within which search is performed is limited to thereby reduce the number of computations to 35, thus reducing the computation amount to about 1/3 of the computation amount of the conventional case. Thus, the moving information can be detected more speedily and a high-speed conveyance higher than the conventional case (more high-speed printing operation) can be handled. In other words, the moving information can be detected even when the CPU of the controller has a smaller computational power than in the conventional case, thus realizing cost reduction of the controller.

In this example, the information acquisition means obtains the information regarding the driving amount of the conveying mechanism from an output value from the rotary encoder. This information functions as a key to estimate where the matching pattern cut out from the first image data is positioned in the second image data. However, the invention is not limited to this and another configuration also may be used. For example, if the conveying motor 14 is a stepping motor, the driving amount can be estimated based on the number of driving pulses. Based on the number of driving pulses, the moving distance between a timing at which the first image data is obtained and a timing at which the second image data is obtained is estimated. Based on this estimated moving distance, the search region is set. Specifically, the information acquisition means acquires the value obtained based on the number of driving pulses of the stepping motor of the driving mechanism as the information regarding the driving amount.

Another method also may be used to acquire the information regarding the driving amount of the conveying mechanism by acquiring this information based on a target control value in the conveyance control in one step in the conveyance control in the controller. Based on the target control value, the moving distance between a timing at which the first image data is obtained and a timing at which the second image data is obtained is estimated. Based on this estimated moving distance, the search region is set. Specifically, the information acquisition means acquires a value obtained based on the target control value in the control unit for controlling the driving of the driving mechanism as the information regarding the driving amount.

Still another method also may be used to acquire the information regarding the driving amount of the conveying mechanism based on a driving profile in the conveyance control by the controller. Based on the control profile, the moving distance between a timing at which the first image data is obtained and a timing at which the second image data is obtained is estimated. Based on this estimated moving distance, the search region is set. Specifically, the information acquisition means acquires the value obtained based on the driving profile of the driving mechanism in the control unit as the information regarding the driving amount.

The correlation processing for making comparison of feature points on image captured by the direct sensor unit is not limited to the configuration using a patterned image as described above. For example, another configuration also may be used where the information regarding reflected light obtained from the direct sensor unit is subjected to Fourier transformation and information obtained at different timings are checked for the matching with regards to each frequency. Alternatively, a moving distance between peak parts also may be acquired. Alternatively, speckle patterns caused by the interference with the reflected light from a coherent light source for example also may be compared. Any these methods must use the correlation processing means that can make comparison between the feature points of two types of image data.

### (Example2)

Examplel assumes a case where one target conveyed amount (one stepwise conveyance operation) is smaller than the detection region of the capturing element of the direct sensor unit 16 and one characteristic pattern (cross-shape pattern) is included in both of two pieces of image data acquired at different timings. In contrast with this, Example 2 is a control method for a case where one stepwisely-conveyed amount is larger than the length of arranged pixels of the direct sensor unit 16. The basic concept of this method is that a plurality of pieces of the image data are acquired in one stepwise moving to thereby perform the conveyance control.

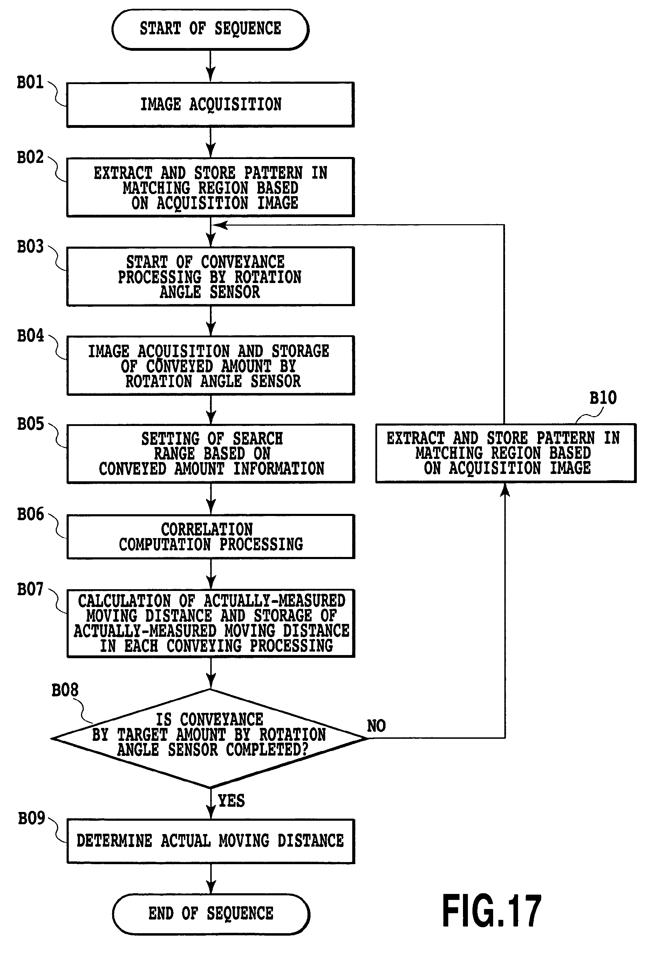

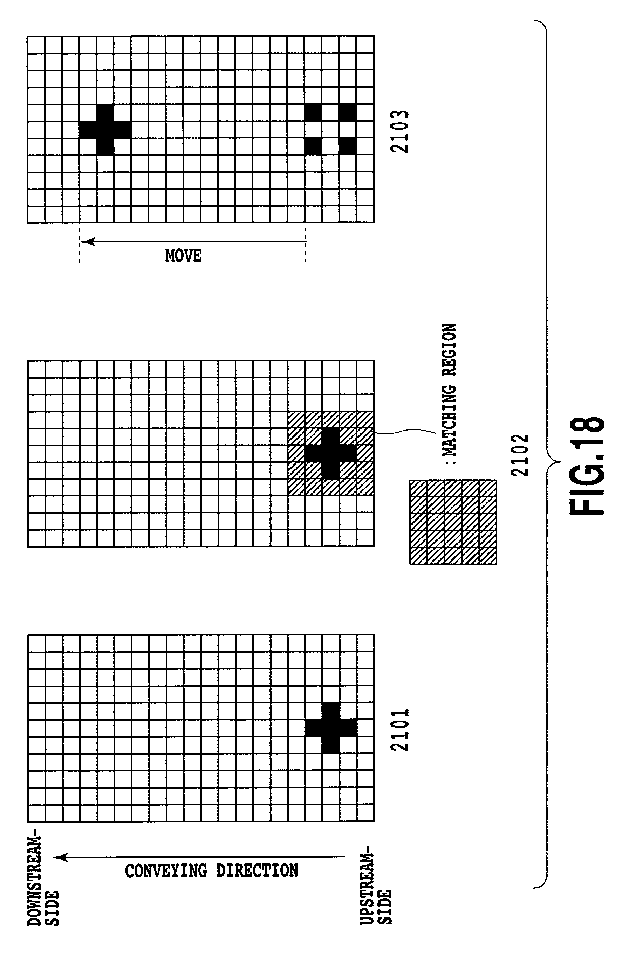

The construction of the apparatus in Example 2 is the same as that in Example 1. The entire sequence is the same as that described in the flowchart of Fig. 10 except for that the method for the actual conveyance amount detection sequence in STEP 5 is different from that in Example 1. Fig. 17 is a flowchart illustrating the actual conveyance amount detection sequence in this example. Fig. 18 is a schematic view illustrating a method of calculating the moving distance and/or the speed of the print medium 8 based on the image data obtained from the direct sensor unit 16.

When the actual conveyance amount detection sequence is started, the CPU 101 in Step B01 uses the direct sensor unit 16 to acquire the image of the print medium 8 as the first image data (2101). When the direct sensor unit 16 is used to capture the surface of the belt 19 in the configuration of Fig. 3, the first image data and the following second image data are images of the surface of the belt.

In Step B02, the CPU 101 causes the matching region having a region of 5 pixels x 5 pixels to be positioned at an appropriate position at the downstream-side of the first image data 2101. Fig. 18 shows an example where the matching region is placed so as to have a characteristic pattern (the cross-shape pattern in this case) which present on the print medium 8. Thereafter, the CPU 101 extracts the image data included in the matching region and stores the data as a matching pattern (the image pattern of a part of the first image data).

In Step B03, based on the information from the rotation angle sensor 18 (i.e., while counting the actually-measured conveyed amount obtained from the rotation angle sensor 18), the conveyance of the print medium 8 in the direction Y is started.

When the predetermined time or the predetermined count amount smaller than one stepwise moving has passed, the direct sensor unit 16 is used in Step B04 while the conveyance operation being performed to acquire the image of the print medium 8 (or the belt 19) as the second image data (2103).

In Step B05, based on the conveyed amount count value at the acquisition of the second image data, a limited search range in the second image data 2103 is set. The method of setting the search range is the same as that in Example 1 and thus will not be further described.

In Step B06, the search range set in Step B05 is subjected to the correlation computation processing in an order from an end pixel. A specific computation algorithm used in this example is the same as that in Example 1 described with reference to Fig. 15 and Fig. 16 and thus will not be further described. By the correlation computation processing in Step B06, the position of the matching region at which the similarity degree is highest is obtained as the result of the correlation computation processing.

In Step B07, based on the processing result of Step B06, the actually-measured moving distance of the print medium conveyed in a period from Step B03 to Step B07 is calculated and stored. In this example, the steps of Step B03 to Step B07 are repeated until the total conveyance amount of the print medium reaches the target conveyance amount corresponding to the one stepwise moving. In Step B07, the informations of actually-measured moving amount are stored every different region.

In Step B08, it is determined whether the count value of the conveyed amount by the rotation angle sensor 18 started from Step B03 has reached the target amount or not. When determining that the count value has not reached the target amount yet, the processing proceeds to Step B10. In Step B10, the second image data 2103 acquired in Step B04 is assumed as the first image data. Then, with regard to this image data, the matching region 2102 is placed at an appropriate position at the upstream-side as in Step B02.

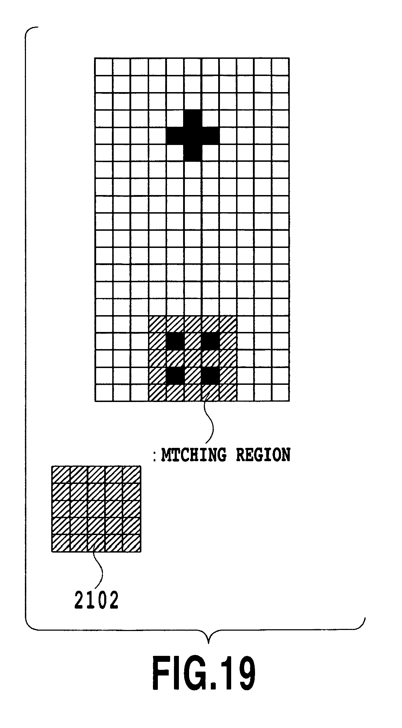

Fig. 19 shows an example where the matching region 2102 is placed so as to have a characteristic pattern (a four-point pattern in this case) which is present on the surface of the print medium 8. Then, the image data included in the matching region is extracted and this data is stored as a matching pattern.

Thereafter, the processing returns to Step B03 to perform the processing as described above based on the newly-stored matching pattern. Until the conveyance amount reaches the target conveyance amount corresponding to one stepwise is confirmed in Step 808, the print medium is conveyed and the steps from Step B03 to Step B08 are repeated. When the conveyance reached the target amount is confirmed in Step B08, then the processing proceeds to Step B09.

In Step B09, the sum of a plurality of actually-measured moving distances stored whenever Step B07 is performed is calculated and this sum is set as the total actual moving amount. Then, the processing proceeds to STEP 6 in the flowchart shown in Fig. 10. The processings after STEP 6 are the same as those in Example 1 and thus will not be described further.

According to this example, even when one conveyed amount (target conveyed amount) of the print medium is larger than the detection region of the direct sensor unit 16, a plurality of parts of moving distance are detected during one conveyance operation to thereby detect the moving distance, thereby achieving the conveyance control. As a result, even when the direct sensor unit 16 has a small capturing element, the moving information can be accurately acquired. This example can be applicable to a printer which performs printing operation while continuous conveying of a print medium in the Y direction.

### (Example 3)

Example1 and Example 2 assume a case where one target conveyed amount is smaller or larger than the detection region of the direct sensor unit 16. On the other hand, Example 3 is a control method for a case where, even in the middle of one printing job, a set search range is within the range of the second image data or not within this range.

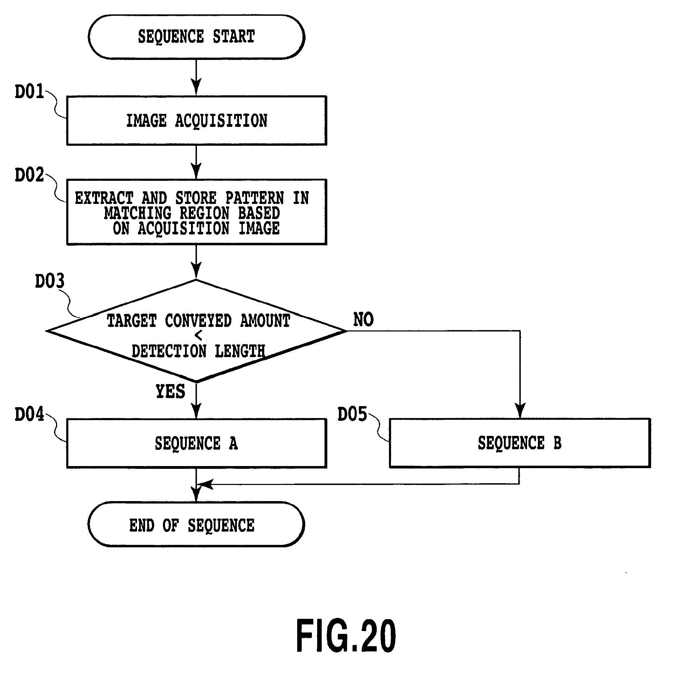

The apparatus in this example has the same configuration as that of Example 1. The entire sequence is the same as that described in the flowchart in Fig. 10 except for that the method of actual conveyance amount detection sequence in STEP 5 is different from that of Example 1. Fig. 20 is a flowchart illustrating the actual conveyance amount detection sequence in this example.

When the actual conveyance amount detection sequence is started, the CPU 101 in Step D01 firstly uses the direct sensor unit 16 to acquire the image of the print medium 8 as the first image data. When the direct sensor unit 16 is used to capture the surface of the belt 19 in the configuration of Fig. 3, the first image data and the following second image data are images of the surface of the belt.

Next, the CPU 101 in Step D02 places the matching region having a region of 5 pixels x 5 pixels at an appropriate position at the upstream-side of the first image data. Thereafter, the CPU 101 extracts the image data included in the matching region and stores this data as a matching pattern (image pattern of a part of the first image data). The processing so far is the same as that of Examples 1 and 2.

Next, in Step D03, the CPU 101 determines whether the image data included in the matching region stored in Step D02 will be beyond the detection region of the direct sensor unit 16 due to the next target amount conveyance operation or not. When determining that the image data will not be beyond the detection region, then the processing proceeds to Step D04 to perform the sequence A. The sequence A is the same as the steps of Step A03 to Step A07 in the flowchart of Fig. 12 described in Example 1.

On the other hand, when it is determined in Step D03 that the image data stored in Step D02 will be beyond the detection region due to the next conveyance operation, the processing proceeds to Step D05 to perform the sequence B. The sequence B is the same as the steps of Step B03 to Step B09 in the flowchart of Fig. 17 described in Example 2. After obtaining the results of the acquisition of the respective actual conveyed amounts, the processing returns to STEP 6 of Fig. 10.

According to this example, even when a set search range is within the range of the second image data or is beyond the range, the moving information can be acquired accurately.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An apparatus comprising:
a mechanism for causing an object (8, 19) to move;
an information acquisition unit which acquires information regarding a driving amount of said mechanism;
a sensor (16) for capturing a surface of the object to acquire image data;
a processing section for processing a first image data (1501) and a second image data (1503) acquired by using said sensor (16) at different timings to thereby obtain moving information of the object (8, 19); and
a control unit for controlling said mechanism based on the moving information obtained by said processing section,
wherein:
said processing section performs processings of:
(a) cutting out an image pattern of a region of a part of the first image data (1501);
(b) limiting a search range (1603) in the second image data (1503) within which a similar region similar to the image pattern is searched based on the information acquired by said information acquisition unit;
(c) searching the similar region within the limited search range (1603) in the second image data (1503); and
(d) obtaining the moving information of the object (8, 19) based on a positional relation between the image pattern in the first image (1501) data and the similar region in the second image data (1503).

2. The apparatus according to claim 1, wherein:
said processing section sets, as the limited search range (1603) in the second image data (1503), a range around an estimated position away from the position of the image pattern of the first image data (1501) by a moving distance that is estimated based on the information acquired by said information acquisition unit and that is caused during a period from a timing at which the first image data (1501) is acquired to a timing at which the second image data (1503) is acquired.

3. The apparatus according to claim 2, wherein:
said processing section sets, as the limited search range (1603), a region obtained by adding a predetermined number of pixels to an upstream-side and a downstream-side of a moving direction of the object with regard to the estimated position.

4. The apparatus according to claim 3, wherein:
said processing section sets, as the limited search range (1603), a region obtained by further adding a predetermined number of pixels to both sides of a direction orthogonal to the moving direction of the object with regard to the estimated position region.

5. The apparatus according to any of claims 1 to 4, wherein:
said information acquisition unit has an encoder for detecting the driving amount of said mechanism and the information regarding the driving amount is a value obtained based on outputs from the encoder during a period from a timing at which the first image (1501) is captured to a timing at which the second image (1503) is captured.

6. The apparatus according to any of claims 1 to 4, wherein:
said information acquisition unit acquires a value obtained based on a target control value in said control unit as the information regarding the driving amount.

7. The apparatus according to any of claims 1 to 4, wherein:
said mechanism has a stepping motor and said information acquisition unit acquires a value obtained based on the number of driving pulses of the stepping motor as the information regarding the driving amount.

8. The apparatus according to any of claims 1 to 4, wherein:
said control unit controls the driving of said mechanism based on a driving profile, and
said information acquisition unit acquires a value obtained based on the driving profile as the information regarding the driving amount.

9. The apparatus according to any of claims 1 to 8, wherein:
said mechanism has a roller (9) given with a driving force and said information acquisition unit acquires information regarding a rotation amount of the roller (9).

10. The apparatus according to claim 9, wherein:
said mechanism has rollers (9, 10) provided at a plurality of positions and a belt (19) extending among the plurality of rollers (9, 10) and rotation of the roller (9, 10) causes the belt (19) to rotate to thereby cause the object provided on the belt (19) to move, and said information acquisition unit acquires information regarding a rotation amount of at least one roller among the plurality of rollers (9, 10).

11. The apparatus according to any of claims 1 to 10, wherein:
the sensor (16) is an area sensor structured so that a plurality of photoelectric conversion elements are arranged in a two-dimensional manner.

12. The apparatus according to any of claims 1 to 11, further comprising a printing unit having a printing head (26) to perform printing onto the object as a print medium (8).

13. The apparatus according to any of claims 1 to 11, further comprising a printing unit having a printing head (26) to perform printing onto a print medium (8), and wherein the object is a belt (19) as a part of the mechanism that conveys the print medium while mounting thereon the print medium.

14. The apparatus according to any of claim 12 or 13, wherein during a period between the acquisition of the first image data (1501) and the acquisition of the second image data (1503), the print medium (8) is conveyed in a stepwise manner by a target amount and the stepwise conveyance and the printing by the printing head (26) are alternately repeated to perform a printing operation.

15. The apparatus according to any of claim 12 or 13, wherein the print medium (8) is continuously conveyed and the conveyance and the printing by the printing head (26) is performed simultaneously.
